# EUROPÄISCHE PATENTANMELDUNG

(11) **EP 3 354 135 A1**
(43) Veröffentlichungstag der Anmeldung: **01.08.2018**
(21) Anmeldenummer: 17153886.1
(22) Anmeldetag: 31.01.2017
(51) Int. Cl.: A01N 25/30, A01N 59/00, A01N 65/00, A01N 65/42, C02F 1/54

(54) **WIRKUNGSVERSTÄRKTE ANTIMIKROBIELLE ZUSAMMENSETZUNG ZUR BEHANDLUNG WASSERHÄLTIGER FLÜSSIGKEITEN**

(71) Anmelder: CuraSolutions GmbH, 1040 Wien (AT)
(72) Erfinder: Fürlinger, Wolfgang, 2700 Wr. Neustadt (AT)
(74) Vertreter: Patentanwaltskanzlei Matschnig & Forsthuber OG

(57) **Zusammenfassung**

Die Erfindung betrifft eine Zusammensetzung zur antimikrobiellen und/oder antioxidativen Behandlung einer wasserhältigen Flüssigkeit und von in der wasserhältigen Flüssigkeit vorliegenden Biofilmen, umfassend: (a) ein micellbildendes Solubilisat umfassend wenigstens ein Pflanzenextrakt, wenigstens einen Emulgator mit einem HLB-Wert von 8 bis 18 sowie Wasser, und (b) zumindest einen biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon ausgewählt ist. Die Erfindung betrifft ferner Verfahren und Verwendungen betreffend diese Zusammensetzung.

## Beschreibung

Die Erfindung betrifft eine neuartige wirkungsverstärkte Zusammensetzung zur antimikrobiellen und/ oder antioxidativen Behandlung einer wasserhältigen Flüssigkeit und von in der wasserhältigen Flüssigkeit vorliegenden Biofilmen und deren spezifische Verwendungen.

Die Erfindung betrifft außerdem ein Verfahren zur antimikrobiellen und/oder antioxidativen Behandlung einer wasserhältigen Flüssigkeit und von in der wasserhältigen Flüssigkeit vorliegenden Biofilmen, insbesondere zur Bekämpfung und zur Vorbeugung des Wachstums von Mikroorganismen in wasserhältigen Flüssigkeiten, mittels der erfindungsgemäßen Zusammensetzung.

Ferner betrifft die Erfindung eine Reihe an wasserbasierten Verwendungen der erfindungsgemäßen Zusammensetzung.

Lediglich 5% der in flüssigen Medien vorhandenen Mikroorganismen wie Bakterien, Pilze oder Protozoen liegen in planktonischer Form vor. Der überwiegende Anteil dieser Mikroorganismen habitiert in sessiler Form an Oberflächenstrukturen und bildet unter bestimmten Umgebungsbedingungen Biofilme in Form von schleimigen Ablagerungen, in denen sie stoffwechselaktiv bleiben und durch die sie vor physikalischen und chemischen Noxen geschützt sind.

Biofilme bestehen aus von Bakterien gebildeten extrazellulären polymeren Substanzen (EPS) und beinhalten neben den Mikroorganismen selbst auch Wasser sowie organische und anorganische Verbindungen. Biofilme bieten den einzelnen Mikroorganismen Schutz und ermöglichen es ihnen, sich auf veränderte Umweltbedingungen wie pH-Wert- oder Temperaturschwankungen einzustellen oder verhindern den Kontakt mit für Mikroorganismen toxischen Substanzen infolge erschwerter Penetration von antimikrobiellen Wirkstoffen durch den Biofilm zu den Mikroorganismen. So ist bekannt, dass man gegenüber im Biofilm eingebetteten Mikroorganismen im Vergleich zu planktonischen Formen 2 bis 3 log₁₀ höhere Konzentrationen an antimikrobiellen Wirkstoffen und unter Umständen um das Vielfache verlängerte Einwirkungszeiten für einen vergleichbar ähnlich hohen antimikrobiellen Effekt benötigt.

Ein häufiges in wasserhältigen Systemen auftretendes Problem ist das Wachstum von Mikroorganismen und die dadurch resultierende Ausbildung von schleimigen Biofilmablagerungen an den Grenzflächen dieser wasserhältigen Systeme. Biofilmablagerungen kommen besonders häufig in industriellen, technischen, medizintechnischen bzw. gewerblichen wasserhältigen Systemen vor, wie beispielsweise in Kühlwassersystemen von Kühltürmen oder in wasserführenden Elementen in medizintechnischen Anlagen, aber auch in wasserhältigen Systemen für Erholungszwecke oder in Zierbrunnen und führen dort zu unerwünschten mikrobiellen Kontaminationen. Ohne eine effiziente und nachhaltige antimikrobielle Behandlung zur Beseitigung der Mikroorganismen bzw. der Biofilme treten Probleme wie eine Verschlechterung der Prozesskühlung von Kühltürmen und Kühlanlagen, sanitäre Probleme in medizintechnischen oder lebensmitteltechnologischen Anlagen oder ästhetische/ sanitäre Probleme bei Schwimmbädern und Zierbrunnen auf. Aufgrund dieser Problematik sind eine Vielzahl an antimikrobiellen Substanzen bzw. Zusammensetzungen, Systemen zur Wasserentkeimung und Verfahren zur Beseitigung und Steuerung des mikrobiellen Wachstums entwickelt worden.

Die DE 10 2005 027 347 A1 beschreibt ein Verfahren zur Herstellung einer antimikrobiell wirkenden Beschichtung auf einer technischen Oberfläche, bei dem eine Lösung aus Polyvinylacetat, einem Konservierungsmittel und einem Lösungsmittel hergestellt wird, die Lösung auf die technische Oberfläche aufgebracht und unter Ausbildung der Beschichtung getrocknet wird. Das Konservierungsmittel ist aus Benzoesäure, Sorbinsäure, Natamycin, Bacteriocine und Pflanzenextrakt ausgewählt. Dieses Verfahren eignet sich jedoch nicht zur Zumischung in wasserhältige Flüssigkeiten.

Die DE 10 2005 032 352 A1 offenbart ein Solubilisat eines Wirkstoffkonzentrats, welches ein Johanniskraut-Extrakt, ein Reseda-Extrakt oder ein Estragon-Extrakt sein kann, mit einem Emulgator und Wasser. Das Solubilisat soll die Bioverfügbarkeit des Wirkstoffs oder des wasserunlöslichen Wirkstoffs in Lebensmitteln verbessern. Eine Anwendung in wasserhältigen Flüssigkeiten ist darin nicht erwähnt.

Die DE 10 2012 103 767 A1 offenbart die Verwendung eines Solubilisats basierend auf micellierten Pflanzenextrakten zur Behandlung von Raumluft, Lebensmitteln, Oberflächen und zur Herstellung von Beschichtungsmaterialien. Eine Anwendung in wasserhältigen Flüssigkeiten ist darin nicht erwähnt.

Die US 2011/0151034 A1 beschreibt ein antibakterielles Mittel gegen Gram-positive Bakterien basierend auf Lippenblütler-Extrakten, wobei auch Emulgatoren zugesetzt werden können.

Die DE 102 13 031 A1 offenbart die Verwendung von Extrakten des Olivenbaumes in Wasch -, Spül- und Reinigungsmitteln.

Die WO 2008/017580 A1 betrifft antimikrobielle Mizellen für Lebensmittelanwendungen.

Viele verfügbaren antimikrobiell wirkenden Substanzen, Mittel und Konservierungsstoffe werden aus Gründen der chemischen Reinheit synthetisch hergestellt, sind teuer in der Herstellung, biologisch nicht abbaubar oder als ökologisch bedenklich einzustufen, was bei Anwendern häufig toxikologische oder ökologische Bedenken hervorruft und auf Ablehnung stößt. Es besteht daher zunehmend ein Bedarf nach natürlichen, ökologisch und ökonomisch vorteilhaften Wirkstoffen. Häufig sind derartige natürliche Wirkstoffe jedoch sehr schlecht wasserlöslich, weisen meist einen intensiven Nebengeruch oder Nebengeschmack auf und können in Anwendungs-möglichen Konzentrationen Biofilme nur schlecht bis gar nicht penetrieren.

Es ist eine Aufgabe der Erfindung, eine neuartige wirkungsverstärkte Zusammensetzung zur antimikrobiellen und/ oder antioxidativen Behandlung von wasserhältigen Flüssigkeiten und insbesondere von in wasserhältigen Flüssigkeiten vorliegenden Biofilmen bereitzustellen, die eine signifikant verbesserte Wirkung hinsichtlich der Beseitigung und der Steuerung des mikrobiellen Wachstums in wasserhältigen Flüssigkeiten und Systemen zeigt und gleichzeitig ökologische und ökonomische Vorteile aufweist.

Eine weitere Aufgabe der Erfindung besteht darin, ein verbessertes Verfahren zur antimikrobiellen und/ oder antioxidativen Behandlung von wasserhältigen Flüssigkeiten und insbesondere von in wasserhältigen Flüssigkeiten vorliegenden Biofilmen bereitzustellen.

Diese Aufgabe wird durch eine Zusammensetzung wie eingangs genannt gelöst, welche erfindungsgemäß umfasst:
a) ein micellbildendes Solubilisat umfassend wenigstens ein Pflanzenextrakt, wenigstens einen Emulgator mit einem HLB-Wert von 8 bis 18 sowie Wasser, und
b) zumindest einen biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon ausgewählt ist.

Peroxide, insbesondere H₂O₂, Hypochlorite und hypochlorige Säuren werden seit vielen Jahren in herkömmlicher Weise zur Wasserbehandlung in technischen Anlagen eingesetzt. Allerdings sind diese Verbindungen höchst flüchtig und mit diesen Verbindungen allein ist kein effizienter Biofilm-Abbau möglich.

Ebenfalls aus dem Stand der Technik bekannt sind antimikrobielle micellbildende Solubilisate, die wenigstens ein Pflanzenextrakt, wenigstens einen Emulgator mit einem HLB-Wert von 8 bis 18 sowie Wasser umfassen. Derartige micellbildende Solubilisate sind beispielsweise in den oben erwähnten Veröffentlichungen DE 10 2012 103 767 A1, US 2011/0151034 A1 und DE 102 13 031 A1 eingehend beschrieben worden.

Die Anmelderin bzw. der Erfinder konnte in überraschender Weise feststellen, dass die Kombination solcher micellbildender Solubilisate mit einem antimikrobiellen Wirkstoff aus der Gruppe der Peroxide, Hypochlorite und hypochlorigen Säuren, eine unerwartet hohe verstärkte Wirksamkeit gegenüber Mikroorganismen aufweist, welche die zu erwartende additive antimikrobielle Wirkung der einzelnen Komponenten signifikant übersteigt. Diese unvorhergesehene verstärkte Wirkung der erfindungsgemäßen Zusammensetzung wird in den beiliegenden experimentellen Ergebnissen und Vergleichsversuchen in deutlicher Weise veranschaulicht. Die spezifische Kombination der einzelnen Komponenten der Zusammensetzung gemäß der Erfindung ist in keinem der hierin genannten Vorveröffentlichung konkret geoffenbart oder in irgendeiner Weise nahegelegt. Nach derzeitigem Wissenstand der Anmelderin ist bislang keine antimikrobielle Zusammensetzung mit den spezifischen Merkmalen bzw. Komponenten gemäß der Erfindung der Öffentlichkeit bekannt geworden.

Dank der Erfindung wird nicht nur eine signifikant verbesserte antimikrobielle Wirkung erreicht, sondern es werden zudem aufgrund der verringerten Anwendungskonzentrationen und/oder Einwirkzeiten ökologische und ökonomische Vorteile erzielt. Die erfindungsgemäße Zusammensetzung ist hocheffizient hinsichtlich ihrer antimikrobiellen Wirksamkeit, ökologisch unbedenklich und kostengünstig in der Anwendung, was insbesondere für großtechnische und großindustrielle wasserhältige Systemen von Vorteil ist. Die biologische Abbaubarkeit der erfindungsgemäß eingesetzten antimikrobiellen Wirkstoffe, d.h. deren Fähigkeit mit der Zeit in umweltverträgliche Komponenten zersetzt zu werden, ist hinlänglich bekannt und muss nicht näher erläutert werden.

Ohne an eine wissenschaftliche Theorie gebunden zu sein, wird vermutet, dass die Kombination aus micellbildendem Solubilisat und dem biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon ausgewählt ist, zu einer Mizellierung des biologisch abbaubaren antimikrobiellen Wirkstoffs führt, weshalb sich das Gemisch gut in der wässrigen Phase verteilt und außerdem durch die entsprechenden Schichten von Biofilm gelangt, wodurch schlussendlich ein guter Kontakt zu Mikroorganismen erreicht werden kann. Zu behandelnde Mikroorganismen können so mit verbesserter Wirksamkeit als mit bekannten Maßnahmen oder Verfahren mit den erfindungsgemäß eingesetzten biologisch abbaubaren antimikrobiellen Wirkstoffen in Kontakt gebracht und unschädlich gemacht werden. Bei der Verwendung der erfindungsgemäßen Zusammensetzung zur mikrobiell hemmenden oder vermindernden Behandlung von Wasser kann durch die Anwendung des biologisch abbaubaren antimikrobiellen Wirkstoffs in mizellierter Form auch unter anderem gewährleistet werden, dass der Wirkstoff nach seiner Freisetzung auf der Zellwand von Mikroorganismen in Zellkompartimente optimal eindringen kann, was aufgrund seiner chemischen und physikalischen Beschaffenheit, beispielsweise Lipophilie, in einer nicht mizellierten Form nicht oder nur schwer erreichbar wäre. Dadurch können in vielen Anwendungsfällen niedrigere Konzentrationen des mizellierten Wirkstoffes oder kürzere Einwirkungszeiten bei vergleichbarer oder besserer Wirkung gegenüber bestehenden Anwendungen eingesetzt werden.

Der Begriff "Mizellierung" bzw. "Micellierung" wie hierin verwendet bezeichnet ein Verfahren, Stoffe, beispielsweise antimikrobiell aktive Roh- und Wirkstoffe mittels Emulgatoren und Wasser in künstliche Mizellen/Micellen zu verpacken. Die Mizellen dienen als Trägermedium für den verpackten Wirkstoff oder die verpackten Wirkstoffe. Das Verfahren folgt im Wesentlichen dem Vorbild der Natur in der Schaffung mizellierter Strukturen. Mizellen mit Durchmessern im zweistelligen Nanometerbereich finden sich beispielsweise in Hühnereiern oder in der Milch. Aber auch der menschliche Organismus stellt unter Verwendung z. B. der Galle kontinuierlich Mizellen her, um fettlösliche Substanzen, wie beispielsweise die Vitamine A, D, E und K, im Körper aufnehmen und/oder metabolisieren zu können. Die Solubilisate nanogroßer Mizellen bilden in Wasser üblicherweise klare Lösungen. Die Mizellen sind im Vergleich zu konventionellen Formulierungen und Mikroverkapselungen von Stoffen thermisch und mechanisch relativ stabil und mikrobiologisch und toxisch unbedenklich. Sie ermöglichen mit Vorteil die hierin beschriebenen Anwendungen für ansonsten schwierig oder bislang nicht an den Wirkungsort transportierbare Wirkstoffe.

Der HLB-Wert (HLB = hydrophilic-lipophilic-balance) ist ein in Fachkreisen gängiger Parameter und beschreibt den hydrophilen und lipophilen Anteil der eingesetzten Emulgatormoleküle. Erfindungsgemäß ist der HLB-Wert der nach der Methode von W. C. Griffin bestimmte Wert auf einer Skala von 1 bis 20. Ein HLB-Wert von 1 spricht für eine lipophile Verbindung, eine chemische Verbindung mit einem HLB-Wert von 20 hat einen hohen hydrophilen Anteil. Ein Wert von etwa 3 bis 8 wird W/O-Emulgatoren zugeordnet, ein Wert von etwa 8 bis 18 O/W-Emulgatoren.

Bei der Verwendung der erfindungsgemäßen Zusammensetzung zur mikrobiell hemmenden oder vermindernden Behandlung von Wasser wird diese gegebenenfalls mit weiterem Lösungsmittel wie z.B. Zitronensäure versetzt und zweckmäßigerweise in einer dafür geeigneten Anwendungsform in oder auf Wasser aufgebracht.

Unter dem Begriff "wässrige Flüssigkeit" wird im Zusammenhang mit der Erfindung jede Art von Flüssigkeit verstanden, deren Hauptbestandteil Wasser ist, beispielsweise technische Prozesswässer wie Kühlwasser, Kreislaufwasser, biotechnologische und lebensmitteltechnologische Prozesslösungen, Fluss- und Seewasser, Abwasser und gereinigtes Abwasser, etc.

Der Begriff "Biofilm" wie hierin verwendet ist ein in den Fachkreisen etablierter Fachbegriff; auf die obigen Erläuterungen zu Biofilmen in wässrigen Milieus wird an dieser Stelle verwiesen.

Bei dem biologisch abbaubaren antimikrobiellen Wirkstoff handelt es sich vorzugsweise um H₂O₂ (Wasserstoffperoxid). H₂O₂ wird seit vielen Jahren zur Wasserbehandlung und zur Desinfektion in technischen Anlagen eingesetzt, ist kostengünstig in großen Mengen verfügbar, besitzt eine ausgeprägte oxidative und antimikrobielle Wirksamkeit und eine hohe Umweltverträglichkeit.

Bei einer vorteilhaften Weiterbildung der Erfindung kann die Zusammensetzung ferner eine Fruchtsäure wie Milchsäure, insbesondere L-(+)-Milchsäure, Äpfelsäure, Zitronensäure oder Oxalsäure umfassen. Vorzugsweise umfasst die Zusammensetzung jedoch L-(+)-Milchsäure, da diese (im Gegensatz von z.B. D-(-)-Milchsäure) von fast allen in der Umwelt vorhandenen Mikroorganismen metabolisiert und daher vollständig abgebaut wird.

Bei einer besonders vorteilhaften Variante der Erfindung umfasst die Zusammensetzung H₂O₂ als biologisch abbaubaren antimikrobiellen Wirkstoff und darüber hinaus L-(+)-Milchsäure.

Bei einer bevorzugten Variante der erfindungsgemäßen Zusammensetzung umfasst der Emulgator wenigstens 80 Gew.-% an Polysorbaten, vorzugsweise Polyoxyethylen-(20)-sorbitanmonolaurat (Polysorbat 20) und/oder Polyoxyethylen-(20)-sorbitanmonooleat (Polysorbat 80).

Vorzugsweise enthält das micellbildende Solubilisat der erfindungsgemäßen Zusammensetzung bei einer Variante 5 bis 40 Gew.-% an Pflanzenextrakt, 30 bis 85 Gew.-% Emulgator und 10 bis 40 Gew.-% Wasser. Vorzugsweise liegt das Gewichtsverhältnis von Pflanzenextrakt zu Wasser bei circa 30:35 und das Gewichtsverhältnis von Pflanzenextrakt zu Emulgator liegt bei circa 30:35.

Handelt es sich bei dem biologisch abbaubaren antimikrobiellen Wirkstoff um Wasserstoffperoxid, so ist dieses vorzugsweise in einer Menge von 13 bis 19 Gew.-% in der Zusammensetzung enthalten.

Bei einer anderen Untervariante kann die erfindungsgemäße Zusammensetzung 13 bis 19 Gew.-% H₂O₂ und 1 bis 2,5 Gew.-% L-(+)-Milchsäure enthalten.

Bei einer weiteren vorteilhaften Variante umfasst die erfindungsgemäße Zusammensetzung das micellbildende Solubilisat mit 5 bis 40 Gew.-% an Pflanzenextrakt, 30 bis 85 Gew.-% Emulgator und 10 bis 40 Gew.-% Wasser sowie als biologisch abbaubaren antimikrobiellen Wirkstoff 13 bis 19 Gew.-% H₂O₂ und zudem noch 1 bis 2,5 Gew.-% L-(+)-Milchsäure. Vorzugsweise liegt das Gewichtsverhältnis von Pflanzenextrakt zu Wasser bei circa 30:35 und das Gewichtsverhältnis von Pflanzenextrakt zu Emulgator liegt bei circa 30:35.

Hinsichtlich der Menge des in der Zusammensetzung enthaltenen biologisch abbaubaren antimikrobiellen Wirkstoffs, ist zu sagen, dass bei einem zu niedrigen Anteil das Verhältnis von antimikrobiellen Wirkstoff zum Trägermaterial (Emulgator und Wasser) zu gering sein kann, so dass eine ausreichende antimikrobielle Wirkung nicht mehr gewährleistet ist. Ein zu hoher Anteil des antimikrobiellen Wirkstoffs bzw. ein zu niedriger Anteil des Emulgators in der Zusammensetzung kann dazu führen, dass sich die Mizellen nicht ausbilden oder instabil sind. Eine Fachperson auf dem Gebiet ist jedoch ohne weiteres in der Lage, anhand von einfachen Routineversuchen die entsprechenden Mengen der Komponenten der erfindungsgemäßen Zusammensetzung für die spezifischen Verwendungen und Anforderungen auszuwählen und entsprechend zu optimieren.

Wie oben bereits erwähnt sind micellbildende Solubilisate, wie sie in der vorliegenden Erfindung zur Anwendung kommen, beispielsweise in den oben erwähnten Vorveröffentlichungen DE 10 2012 103 767 A1, US 2011/0151034 A1 und DE 102 13 031 A1 eingehend beschrieben worden. Insbesondere wird hier auf die DE 10 2012 103 767 A1, wonach die darin beschriebenen Pflanzenextrakte auch für die vorliegende Erfindung eingesetzt werden können.

Dementsprechend und unter Berücksichtigung der DE 10 2012 103 767 A1 beziehen sich die hierin synonym verwendeten Begriffe "Pflanzenextrakt" bzw. "Phytoextrakt" im Sinne der vorliegenden Erfindung auf ein Extrakt oder eine Mischung von Extrakten aus Gewürzpflanzen und/oder Zitruspflanzen oder Teilen solcher Pflanzen oder Teilen anderer in der Natur vorkommender Pflanzen. Der Begriff Phytoextrakt bzw. Pflanzenextrakt umfasst auch Bestandteile oder Fraktionen der vorgenannten Extrakte, beispielsweise durch bestimmte Lösungsmittel oder durch Destillation aus den Rohextrakten erhaltene Auszüge oder Fraktionen. Dabei können auch Pflanzenextrakte eingesetzt werden, die selbst eine gewisse antimikrobielle Wirkung besitzen. Eine Übersicht erfindungsgemäß einsetzbarer Pflanzenextrakte mit antimikrobieller Wirkung beschreiben folgende Artikel: a) Rios, J.L., Recio, M.C. Medical plants and antimicrobial activity; J Ethnopharmacol 2005;100:80-4; b) Burt, S. Essential Oils: their antibacterial properties and potential applications in foods - a review; Int J Food Microbiol 2000;94:223-53; c) Keyal, U., Huang, X, Bhatta, A. K. Antifungal effect of plant extract and essential oil. Chin J Integr Med 2016, DOI: 10.1007/s11655-016-2524-z; d) Bacha, K., Tariki, Y., Gebreyesus, F., Zerihun, S., Mohammed, A., Weiland-Bräuer, N., Schmitz, R. A., Mulat, M. Antimicrobial and anti-Quorum sensing activities of selected medical plants of Ethiopia: Implication for development of potent antimicrobial agents. BMC Microbiol 2016;16:139; e) Cascaes, M. M., Guihon, G. M., Andrade, E. H., Zoghbi, M. D., Santos Lda, S. Constituents and pharmacological activities of Myrcia (Myrtaceae): A review of an aromatic and medicinal group of plants. Int J Mol Sci 2015;16:23881-904; f) Kramer, A., Assadian, O. (Hrsg.) Wallhäußers Praxis der Sterilisation, Desinfektion und Antiseptik. 6. Ausgabe (2009, Georg Thieme Verlag, Stuttgart. Kapitel 70, pp 887-891.

Die in den vorgenannten Literaturstellen genannten Pflanzenextrakte (Phytoextrakte, Phytoderivate) stellen keine abschließende Darstellung der erfindungsgemäß einsetzbaren Pflanzenextrakte dar, sondern lediglich Beispiele geeigneter Pflanzenextrakte. Eine Fachperson auf dem Gebiet wird in der Lage sein, aus den zur Verfügung stehenden Pflanzenextrakten und unter Nutzung der für die jeweiligen Pflanzenextrakte veröffentlichten Untersuchungen und Eigenschaftsbeschreibungen einen oder mehrere für die jeweils geplante Anwendung geeignete Pflanzenextrakte auszuwählen.

Pflanzenteile, aus denen Pflanzenextrakte im Sinne der vorliegenden Erfindung hergestellt werden, umfassen, sind aber nicht beschränkt auf ganze Pflanzen, Wurzeln, Stengel, Stämme, Zweige, Blätter, Blüten, Blütenstände, Samen, Früchte und Teile von Früchten. Weitere geeignete Pflanzenteile sind beispielsweise den oben genannten Literaturstellen zu entnehmen.

Das Pflanzenextrakt ist vorzugsweise aus der Gruppe bestehend aus Extrakten aus Gewürzpflanzen oder Teilen davon, Extrakten aus Zitruspflanzen oder Teilen davon und aus Kombinationen dieser Extrakte ausgewählt.

Gewürzpflanzen, aus denen Pflanzenextrakte im Sinne der vorliegenden Erfindung hergestellt werden, umfassen, sind aber nicht beschränkt auf Zwiebel, Knoblauch, Oliven, Rosmarin, Küchenkräuter, Lorbeerblätter, Safran, Gewürznelken, Kapern, Zimt, Ingwer, Meerrettich, Muskatnuss, Pfeffer, Paprika, Wacholderbeeren, Vanille, Kümmel, Anis, Kakao, Nelken, Chili, Pomeranzen, Fenchel, Guarana, Colanuss und Salbei. Weitere geeignete Pflanzen sind beispielsweise den oben genannten Literaturstellen zu entnehmen.

Zitruspflanzen, aus denen Pflanzenextrakte im Sinne der vorliegenden Erfindung hergestellt werden, umfassen, sind aber nicht beschränkt auf Zitrone, Limone, Limette, Orange, Mandarine, Klementine, Pampelmuse, Bergamotte, Kumquat, Limquat, Minneola, Pomelo, Satsuma, Tangerine, Orantique, Poneranze, Ugli. Weitere geeignete Pflanzen sind beispielsweise den oben genannten Literaturstellen zu entnehmen.

Pflanzenextrakte von Gewürz- oder Zitruspflanzen der in der Erfindung eingesetzten Art sind generell bekannt. Es handelt sich grundsätzlich um Stoffgemische, die in Ihrer Zusammensetzung je nach den verwendeten Pflanzen und Pflanzenteilen, deren Wachstumsstadien und den eingesetzten Extraktionsmethoden variieren. Eine konkrete und abschließende Benennung der in einem Pflanzenextrakt enthaltenen Einzelverbindungen ist daher in Sinne der vorliegenden Erfindung weder möglich noch sinnvoll und würde der Erfindung nicht gerecht werden. Pflanzenextrakt im Sinne der vorliegenden Erfindung enthält überwiegend lipophile Verbindungen. Pflanzenextrakte von Nutz-, Gewürz- oder Zitruspflanzen der in der Erfindung eingesetzten Art sind dem Experten bekannt und handelsüblich erhältlich, beispielsweise von der Firma Cognis GmbH, Düsseldorf, Deutschland, Produkt Cegemett Fresh oder von der Firma Procena GmbH, Illertissen, Deutschland, Produkt ProExtract P150.

Besonders bevorzugt stammt das Pflanzenextrakt jedoch aus Oliven, Knoblauch, Zwiebeln und/ oder Zitrusfrüchten. Ein Beispiel für ein kommerziell erhältliches Pflanzenextrakt umfassend Pflanzenextrakte aus Oliven, Knoblauch, Zwiebeln und Zitrusfrüchten ist das Produkt ProExtrakt P150 der Firma Procena GmbH, Deutschland.

Pflanzenextrakte im Sinne der vorliegenden Erfindung können nach bekannten Verfahren hergestellt werden. Beispiele für die Herstellung von Pflanzenextrakten umfassen, sind aber nicht beschränkt auf Extraktion mit organischen Lösungsmitteln, wie Ethanol, Methanol, Chloroform oder Aceton. Weitere geeignete Extraktionsverfahren sind beispielsweise den oben genannten Literaturstellen und den weiteren Verweisen darin zu entnehmen.

Mit Vorteil weisen die Micellen (Mizellen) einen mittleren Durchmesser von 1 bis 100 nm, vorzugsweise von 3 bis 50 nm, besonders bevorzugt von 5 bis 20 nm auf. Sind die Mizellen zu groß, können die oben beschriebenen Vorteile in den jeweiligen Anwendungen gegebenenfalls nicht erzielt werden. Sind sie hingegen zu klein, können sie keinen oder zu wenig an biologisch abbaubaren antimikrobiellen Wirkstoff aufnehmen.

Ein weiterer Gegenstand der Erfindung betrifft wie eingangs erwähnt ein Verfahren zur antimikrobiellen und/ oder antioxidativen Behandlung einer wasserhältigen Flüssigkeit und von in der wasserhältigen Flüssigkeit vorliegenden Biofilmen, insbesondere zur Bekämpfung und zur Vorbeugung des Wachstums von Gram-positiven und Gram-negativen Bakterien, Pilzen und/oder Protozoen in wasserhältigen Flüssigkeiten und in Biofilmen, wobei das Verfahren erfindungsgemäß das Einbringen einer wirksamen Menge einer erfindungsgemäßen Zusammensetzung, wie sie in dieser Offenbarung beschrieben und definiert ist, in die wasserhältige Flüssigkeit umfasst. Unter "Einbringen in die wasserhältige Flüssigkeit" versteht man alle möglichen Arten des Inkontaktbringens der Zusammensetzung mit der wasserhältigen Flüssigkeit, beispielsweise durch Hinzufügen der Zusammensetzung in die wasserhältige Flüssigkeit oder durch Aufbringen der Zusammensetzung auf die wasserhältige Flüssigkeit.

Der Ausdruck "wirksame Menge einer erfindungsgemäßen Zusammensetzung" wird hierin zur Bezeichnung jeder beliebigen Menge der Zusammensetzung verwendet, die eine antimikrobielle und/oder antioxidative Wirksamkeit gegenüber Mikroorganismen hat und eine Bekämpfung (in Form einer Hemmung/Abtötung) bzw. eine Vorbeugung des Wachstums von Mikroorganismen, insbesondere von Gram-positiven und Gram-negativen Bakterien, Pilzen und/ oder Protozoen in wasserhältigen Flüssigkeiten und in Biofilmen möglich macht, wenn sie mit der zu behandelnden Flüssigkeit bzw. dem Biofilm in Kontakt gebracht wird. Die Menge der Zusammensetzung wird von der jeweiligen Anwendung, der Dimensionierung und der Geometrie des zu behandelnden wasserführenden Systems (z.b. der Anordnung, des Durchmessers und der Länge der wasserführenden Kühlleitungen), der Art des zu behandelnden Wassers (z.B. Prozesswasser, Abwasser), des Grads der mikrobiellen Belastung und der Art der vorhandenen Mikroorganismen abhängen. Bei manchen Anwendungen kann eine einmalige Zugabe der Zusammensetzung in entsprechenden Zeitabständen ausreichend sein, während bei anderen Anwendungen eine engmaschige Wiederholung der Zugabe über eine gewisse Zeitdauer notwendig ist. Die geeignete Menge lässt sich in jedem beliebigen Fall mühelos von einer Fachperson auf dem Gebiet erkennen und mit Hilfe von einfachen Routineversuchen experimentell bestimmen und optimieren.

Das Verfahren kann insbesondere vorsehen, dass die Zusammensetzung in eine die wasserhältige Flüssigkeit und/oder den Biofilm enthaltende wasserführende Leitung, insbesondere eine Kühlwasserleitung (z.B. eine Kühlwasserleitung eines Kühlturms), eingebracht wird.

Ein weiterer Gegenstand der Erfindung betrifft die Verwendung der antimikrobiellen Zusammensetzung, wie sie in dieser Offenbarung beschrieben und definiert ist, zur antimikrobiellen und/ oder antioxidativen Behandlung einer wasserhältigen Flüssigkeit und von in der wasserhältigen Flüssigkeit vorliegenden Biofilmen.

Vorzugsweise ist die wässrige Flüssigkeit aus der Gruppe bestehend aus Prozesswasser, Abwasser, Oberflächenwasser und Füllwasser ausgewählt.

Der Begriff "Oberflächenwasser" bezieht sich insbesondere, aber nicht ausschließlich auf Fluss- und Seewasser, in denen die Anzahl vorkommender Mikroorganismen reduziert oder stabil gehalten werden soll oder in denen die Bildung von Biofilm verzögert werden soll.

Der Begriff "Abwasser" schließt nicht nur Abwasser im eigentlichen Sinn ein, sondern auch gereinigtes Abwasser bzw. geklärtes Abwasser (Klarwasser), in denen vorkommende Biofilme behandelt werden sollen.

Der Begriff "Prozesswasser" (oftmals auch als Nutz-, Brauch- oder Betriebswasser bezeichnet) bezieht sich in erster Linie auf Wasser, das in technischen, medizinischen, industriellen bzw. gewerblichen Anlagen zum Einsatz kommt. Dies beinhaltet z.B. Kühlwasser in Medizinprodukten wie z.B. rotierende Bohrer oder Sägen, oder Kühlwasser in Heater-Cooling Units zur Kühlung/ Wärmen von Patienten während chirurgischen Eingriffen oder der Temperaturkontrolle intensivpflichtiger Patienten.

Bei einer Ausführungsform liegt das Prozesswasser als Kühlwasser in einem Kühlwassersystem, insbesondere in einem Kühlwassersystem für Kühltürme, vor oder wird für die Nutzung in einem Kühlwasserssystem, insbesondere in einem Kühlwassersystem für Kühltürme, behandelt. Beim Austauschverfahren wird das System entleert und hernach die Zusammensetzung gemäß der Erfindung (mit Wasser vorgemischt) an der Wurzel der jeweiligen Anlage mittels Pumpe eingebracht. Beim Injektionsverfahren wird die Zusammensetzung gemäß der Erfindung über eine Impfstelle für die Dauer der Anwendung permanent dem Kühl- bzw. Prozesswasser beigemengt.

Bei einer weiteren Ausführungsform liegt das Prozesswasser in wasserführenden Elementen von Bierbrauanlagen, Durchlaufkühlern und/ oder Schankzapfanlagen vor oder für die Nutzung in Bierbrauanlagen, Durchlaufkühlern und/oder Schankzapfanlagen behandelt.

Bei noch einer weiteren Ausführungsform liegt das Prozesswasser in wasserführenden Elementen von medizintechnischen Anlagen vor oder wird für die Nutzung in medizintechnischen Anlagen behandelt. Die Verwendung kann sich dabei auf die antimikrobielle Behandlung von Wasser in z.B. Dentaleinheiten (Bohr-Kühlwasser und Spülwasser, nicht aber Patienten-Trinkwasser einer Dentaleinheit), Kühlwasser rotierender medizinischer Instrumente, oder Heater-Cooling-Units zur Kühlung/ Wärmen von Patienten während chirurgischen Eingriffen oder der Temperaturkontrolle intensivpflichtiger Patienten beziehen.

Bei dem Begriff "Füllwasser" kann es sich insbesondere um Füllwasser für Wasserbecken (z.B. Zierbrunnen, Erholungs- und Sporteinrichtungen wie Bäder, Schwimmbäder und Pools), für Hauswasserleitungen und für Heizwasserkreisläufe handeln.

Ein weiterer Gegenstand der Erfindung betrifft die Verwendung eines micellbildenden Solubilisats, wie es hierin definiert und geoffenbart ist, als antimikrobieller und/ oder antioxidativer Wirkstoffverstärker für einen biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon, vorzugsweise H₂O₂, ausgewählt ist.

Die erfindungsgemäße Zusammensetzung ist beispielsweise mit einem Verfahren erhältlich, welches die folgenden Schritte umfasst:
a) Mischen des zumindest einen Pflanzenextrakts mit Wasser bei etwa 45 bis 50 °C;
b) Zugeben des auf vorzugsweise circa 50 °C erwärmten wenigstens einen Emulgators mit einem HLB-Wert von 8 bis 18 zum Gemisch aus Pflanzenextrakt und Wasser;
c) Erhitzen des Gemischs aus Pflanzenextrakt, Wasser und Emulgator, vorzugsweise auf etwa 90 °C, und homogenisieren des Gemischs bis zum Erhalt des micellbildenden Solubilisats;
d) Zugeben des zumindest einen biologisch abbaubaren antimikrobiellen Wirkstoffs, der aus der Gruppe bestehend aus Peroxiden, einschließlich Peroxicarbonsäuren und H₂O₂, Hypochloriten, hypochloriger Säure und einer Kombination davon ausgewählt ist, und vorzugsweise H₂O₂ ist; und
e) gegebenenfalls Zugeben einer Fruchtsäure, vorzugsweise L-(+)-Milchsäure.

Die Erfindung und deren Vorteile, insbesondere deren antimikrobielle (biozide) Wirksamkeit, werden im Folgenden anhand von Beispielen näher erläutert.

### BEISPIEL 1: Herstellung einer erfindungsgemäßen Zusammensetzung unter Verwendung eines mizellbildenden Solubilisates.

Als Pflanzenextrakt wurde ProExtrakt P150 der Firma Procena GmbH, Deutschland, verwendet, welches ein Gemisch von Pflanzenextrakten aus Oliven, Knoblauch, Zwiebeln und Zitrusfrüchten sowie Glycerin (E 422) und Vitamin C (Ascorbinsäure, E 300) enthält. Es ist bekannt, dass Oliven, Knoblauch, Zwiebeln und Zitrusfrüchte Stoffe enthalten, die neben antioxidativen Eigenschaften auch antimikrobielle Wirkung besitzen, die sich gegen Bakterien, Hefen und Pilze richtet. Bekannte aktive Stoffe sind beispielsweise Oleuropein in Oliven und Allicin in Knoblauch.

Für die Herstellung der erfindungsmäßigen antimikrobiellen, wirkungsverstärkten Zusammensetzung wurden 30 Gew.-% ProExtrakt P150 mit 35 Gew.-% Wasser bei etwa 45 bis 50 °C vermischt und dieses Gemisch in 35 Gew.-% des auf etwa 50 °C erwärmten Emulgators Polysorbat 80 (Novasol Art. Nr. EW0240/2, Aquanova AG, 64295 Darmstadt, DE; E-Nummer: E 433) eingerührt. Die erhaltene Zubereitung wurde anschließend auf etwa 90 °C erhitzt und homogenisiert, bis das gewünschte öl- und wasserlösliche micellbildende Solubilisat erhalten wurde. Anschließend wurden in diesem Beispiel der biologisch abbaubare antimikrobielle Wirkstoff H₂O₂ (Wasserstoffperoxid; IBEN Mikro Stop GmbH, 27572 Bremerhaven, DE) mit 15 bis 19 Vol.% sowie zur zusätzlichen Wirkstoffverstärkung zudem L-(+)-Milchsäure (IBEN Mikro Stop GmbH, 27572 Bremerhaven, DE) mit 2 bis 2,5 Vol.% und gegebenenfalls zusätzliches Wasser zugesetzt, wobei eine wirkungsverstärkte antimikrobielle Zusammensetzung gemäß der Erfindung erhalten wurde, die zur Behandlung von Wasser durch Einbringen in oder Aufbringen auf Wasser wie, aber nicht ausschließlich, Trinkwasser, Abwasser, Prozesswasser, oder Oberflächenwasser eingesetzt werden kann. Die Mizellen, die in der mittels dieses Verfahrens erhaltenen Zusammensetzung enthaltenen sind, besitzen eine Größe von circa 3-50 nm, vorzugsweise von 5-20 nm. Unter den oben beschriebenen Bedingungen bilden sich automatisch Mizellen in den angegebenen Größenbereichen, wobei die Größen der Mizellen von einer Fachperson ohne weiteres eingestellt bzw. optimiert werden können.

### BEISPIEL 2 - Antimikrobielle Wirksamkeit der erfindungsgemäßen Zusammensetzung in simuliertem Kühlwasser.

Probelösungen von 0,1 Gew.-%, 0,25 Gew.-%, 0,5 Gew.-%, 1 Gew.-%, 2,5 Gew.-%, 5 Gew.-% und 10 Gew.-% der unter Beispiel 1 beschriebenen erfindungsgemäßen Zusammensetzung wurden in akkreditierten mikrobiologischen Laboratorien in Deutschland gemäß DIN EN 13623:2010 im Vergleich zu Wasser standardisierter Härte (WSH) als Kontrolle, einer wässrigen 7,5% H₂O₂ (Wasserstoffperoxid; 50%-ige Lösung eines 15 Vol.-% H₂O₂ Ausgangslösung in Wasser) als Kontrolle, einer wässrigen 1%-igen Polysorbat 80 Lösung als Kontrolle, einer wässrigen 20%-igen Pflanzenextrakt-Lösung als Kontrolle und einer wässrigen 20%igen Lösung des funktionalisierten Pflanzenextrakts (micellbildendes Solubilisat) als Kontrolle gegen *Legionella pneumophilia* (ATCC 33152) in wässriger Umgebung bei pH 8,0 unter Zusatz von 0,005% Hefeextrakt zur Simulierung von Kühlwasser bei Einwirkungszeiten von 15 min, 30 min, 60 min und 120 min untersucht.

Die Messergebnisse der antimikrobiellen Wirkung von WSH, einer wässrigen 7,5% H₂O₂ Lösung allein, des Pflanzenextrakt ProExtrakt P150 allein, des Emulgators Polysorbat 80 allein, des funktionalisierten Pflanzenextrakts (micellbildendes Solubilisats) allein sowie unterschiedlicher Verdünnungen der erfindungsgemäßen Zusammensetzung sind nachfolgend in der Tabelle 1 wiedergegeben.

**Tabelle 1 - Wirkungsverstärkte antimikrobielle Effektivität einer erfindungsgemäßen Zusammensetzung (H₂O₂ und L-(+)-Milchsäure in wässrigem Milieu in Kombination mit einem micellbildenden Solubilisat):**

| **Prüfstoff** | **Funktion** | **15 min** | **30 min** | **60 min** | **120 min** |
|---|---|---|---|---|---|
| WSH | Kontrolle | 0,07 | 0,08 | 0,08 | 0,10 |
| 7,50% H₂O₂ | Kontrolle | 2,24 | 3,44 | 4,25 | 4,83 |
| 1% PSb 80 | Kontrolle | 0,06 | 0,09 | 0,09 | 0,11 |
| 20% PE | Kontrolle | 0,76 | 0,92 | 1,24 | 1,27 |
| 20% fPE | Kontrolle | 0,80 | 0,95 | 1,30 | 1,25 |
| 10,00% WVAG | Intervention | > 5,56 | > 5,56 | > 5,56 | > 5,56 |
| 5,00% WVAG | Intervention | > 5,56 | > 5,56 | > 5,56 | > 5,56 |
| 2,50% WVAG | Intervention | > 5,56 | > 5,56 | > 5,56 | > 5,56 |
| 1,00% WVAG | Intervention | > 5,55 | > 5,56 | > 5,56 | > 5,56 |
| 0,50% WVAG | Intervention | 4,56 | > 5,55 | > 5,55 | n.d. |
| 0,25% WVAG | Intervention | < 3,18 | > 5,55 | > 5,55 | n.d. |
| 0,10% WVAG | Intervention | < 2,88 | < 2,88 | < 2,88 | n.d. |

Ergebnisse als Log₁₀ Reduktionsfaktor gegenüber L. *pneumophilia* (ATCC 33152) dargestellt; n.d. = nicht durchgeführt; WSH = Wasser standardisierter Härte; PSb 80 = Polysorbat 80; PE = Phytoextrakt (P150); fPE = funktionalisiertes Phytoextrakt (= mizellbildendes Solubilisat); WVAG = Wirkungsverstärktes antimikrobielles Gemisch

Die Ergebnisse zeigen deutlich, dass im Vergleich zu WSH, welches erwartungsgemäß keine antimikrobielle Wirkung zeigt, die antimikrobielle Wirkung von H₂O₂ durch Verpackung in Mizellen aus funktionalisierten Phytoextrakten und Milchsäure gegenüber H₂O₂ alleine bzw. gegenüber den Kontrollen gesteigert wird. Dieses Phänomen ist auch wirksam gegen das in Wasser vorkommende und Biofilm bildende Bakterium L. *pneumophilia* in Kühlwasser, wie es z.B. in technischen Kühltürmen eingesetzt wird.

Die Ergebnisse der Versuche zeigen, dass durch Anwendung eines wirkungsverstärkten antimikrobiellen Wirkstoffes oder Wirkstoffgemische mittels micellbildender Solubilisate auf Basis von Pflanzenextrakt/Emulgator die Anwendungskonzentrationen und/oder Einwirkungszeiten bestehender bekannter antimikrobieller Substanzen in Wasser zum Zwecke der antimikrobiellen Behandlung von Wasser durch Einbringen in oder Aufbringen auf Wasser wie beispielsweise, aber nicht ausschließlich, Füllwasser, Abwasser, Prozesswasser oder Oberflächenwasser verringert werden können.

Die Ergebnisse zeigen außerdem, dass selbst alle Verdünnungsstufen der erfindungsgemäßen Zusammensetzung beim überwiegenden Anteil aller getesteten Konzentrationen und Einwirkzeiten eine bessere Hemmwirkung gegen L. *pneumophilia* in simuliertem Kühlwasser besitzt. Die entsprechende nicht mizellierte antimikrobielle Prüfprobe zeigte hingegen keine verbesserte Hemmwirkung gegenüber der mizellierten Prüfprobe in den untersuchten Proben.

### LITERATUR

Rios, J.L., Recio, M.C. Medical plants and antimicrobial activity; J Ethnopharmacol 2005;100:80-4
Burt, S. Essential Oils: their antibacterial properties and potential applications in foods - a review; Int J Food Microbiol 2000;94:223-53.
Keyal, U., Huang, X, Bhatta, A. K. Antifungal effect of plant extract and essential oil. Chin J Integr Med 2016, DOI: 10.1007/s11655-016-2524-z.
Bacha, K., Tariki, Y., Gebreyesus, F., Zerihun, S., Mohammed, A., Weiland-Bräuer, N., Schmitz, R. A., Mulat, M. Antimicrobial and anti-Quorum sensing activities of selected medical plants of Ethiopia: Implication for development of potent antimicrobial agents. BMC Microbiol 2016;16:139.
Cascaes, M. M., Guihon, G. M., Andrade, E. H., Zoghbi, M. D., Santos Lda, S. Constituents and pharmacological activities of Myrcia (Myrtaceae): A review of an aromatic and medicinal group of plants. Int J Mol Sci 2015;16:23881-904.
Kramer, A., Assadian, O. (Hrsg.) Wallhäußers Praxis der Sterilisation, Desinfektion und Antiseptik. 6. Ausgabe (2009, Georg Thieme Verlag, Stuttgart; Kapitel 70, pp 887-891.

## Patentansprüche

1. Zusammensetzung zur antimikrobiellen und/ oder antioxidativen Behandlung einer wasserhältigen Flüssigkeit und von in der wasserhältigen Flüssigkeit vorliegenden Biofilmen, umfassend:
a) ein micellbildendes Solubilisat umfassend wenigstens ein Pflanzenextrakt, wenigstens einen Emulgator mit einem HLB-Wert von 8 bis 18 sowie Wasser, und
b) zumindest einen biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon ausgewählt ist.

2. Zusammensetzung nach Anspruch 1, **dadurch gekennzeichnet, dass** der biologisch abbaubare antimikrobielle Wirkstoff H₂O₂ ist.

3. Zusammensetzung nach Anspruch 1 oder 2, **dadurch gekennzeichnet, dass** die Zusammensetzung ferner eine Fruchtsäure, vorzugsweise L-(+)-Milchsäure, umfasst.

4. Zusammensetzung nach Anspruch 3, **dadurch gekennzeichnet, dass** sie H₂O₂ als biologischen abbaubaren antimikrobiellen Wirkstoff und L-(+)-Milchsäure umfasst.

5. Zusammensetzung nach einem der Ansprüche 1 bis 4, **dadurch gekennzeichnet, dass** der Emulgator wenigstens 80 Gew.-% an Polysorbaten, vorzugsweise Polyoxyethylen-(20)-sorbitanmonolaurat (Polysorbat 20) und/oder Polyoxyethylen-(20)-sorbitanmonooleat (Polysorbat 80), umfasst.

6. Zusammensetzung nach einem der Ansprüche 1 bis 5, **dadurch gekennzeichnet, dass** das micellbildende Solubilisat 5 bis 40 Gew.-% an Pflanzenextrakt, 30 bis 85 Gew.-% Emulgator und 10 bis 40 Gew.-% Wasser enthält.

7. Zusammensetzung nach Anspruch 6, **dadurch gekennzeichnet, dass** die Zusammensetzung 13 bis 19 Gew.-% H₂O₂ und 1 bis 2,5 Gew.-% L-(+)-Milchsäure enthält.

8. Zusammensetzung nach einem der Ansprüche 1 bis 7, **dadurch gekennzeichnet, dass** das Pflanzenextrakt aus der Gruppe bestehend aus Extrakten aus Gewürzpflanzen oder Teilen davon, Extrakten aus Zitruspflanzen oder Teilen davon und aus Kombinationen dieser Extrakte ausgewählt ist.

9. Zusammensetzung nach Anspruch 8, **dadurch gekennzeichnet, dass** das Pflanzenextrakt aus Oliven, Knoblauch, Zwiebeln und/oder Zitrusfrüchten stammt.

10. Zusammensetzung nach einem der Ansprüche 1 bis 9, **dadurch gekennzeichnet, dass** die Micellen einen mittleren Durchmesser von 1 bis 100 nm, vorzugsweise von 3 bis 50 nm, besonders bevorzugt von 5 bis 20 nm aufweisen.

11. Verwendung der antimikrobiellen Zusammensetzung nach einem der Ansprüche 1 bis 10 zur antimikrobiellen und/ oder antioxidativen Behandlung einer wasserhältigen Flüssigkeit und von in der wasserhältigen Flüssigkeit vorliegenden Biofilmen.

12. Verwendung nach Anspruch 11, **dadurch gekennzeichnet, dass** die wässrige Flüssigkeit aus der Gruppe bestehend aus Prozesswasser, Abwasser, Oberflächenwasser und Füllwasser ausgewählt ist.

13. Verwendung nach Anspruch 12, **dadurch gekennzeichnet, dass** es sich bei dem Prozesswasser um Wasser in technischen, medizinischen, industriellen bzw. gewerblichen Anlagen handelt.

14. Verwendung nach Anspruch 12 oder 13, **dadurch gekennzeichnet, dass** das Prozesswasser als Kühlwasser in einem Kühlwassersystem, insbesondere in einem Kühlwassersystem für Kühltürme, vorliegt oder für die Nutzung in einem Kühlwasserssystem, insbesondere in einem Kühlwassersystem für Kühltürme, behandelt wird.

15. Verwendung nach Anspruch 12 oder 13, **dadurch gekennzeichnet, dass** das Prozesswasser in wasserführenden Elementen von Bierbrauanlagen, Durchlaufkühlern und/ oder Schankzapfanlagen vorliegt oder für die Nutzung in Bierbrauanlagen, Durchlaufkühlern und/oder Schankzapfanlagen behandelt wird.

16. Verwendung nach Anspruch 12 oder 13, **dadurch gekennzeichnet, dass** das Prozesswasser in wasserführenden Elementen von medizintechnischen Anlagen vorliegt oder für die Nutzung in medizintechnischen Anlagen behandelt wird.

17. Verwendung nach Anspruch 12, **dadurch gekennzeichnet, dass** es sich bei dem Füllwasser um Füllwasser für Wasserbecken, Hauswasserleitungen und Heizwasserkreisläufe handelt.

18. Verwendung eines micellbildenden Solubilisats, wie es in den Ansprüchen 1 bis 10 definiert ist, als antimikrobieller und/oder antioxidativer Wirkstoffverstärker für einen biologisch abbaubaren antimikrobiellen Wirkstoff, der aus der Gruppe bestehend aus Peroxiden, einschließlich Peroxicarbonsäuren und H₂O₂, Hypochloriten, hypochloriger Säure und einer Kombination davon, vorzugsweise H₂O₂, ausgewählt ist.

19. Verfahren zur antimikrobiellen und/oder antioxidativen Behandlung einer wasserhältigen Flüssigkeit und von in der wasserhältigen Flüssigkeit vorliegenden Biofilmen, insbesondere zur Bekämpfung und zur Vorbeugung des Wachstums von Gram-positiven und Gram-negativen Bakterien, Pilzen und/ oder Protozoen in wasserhältigen Flüssigkeiten, umfassend das Einbringen einer wirksamen Menge einer Zusammensetzung nach einem der Ansprüche 1 bis 10 in die wasserhältige Flüssigkeit.

20. Verfahren nach Anspruch 19, wobei die Zusammensetzung in eine die wasserhältige Flüssigkeit und/oder den Biofilm enthaltende wasserführende Leitung, insbesondere eine Kühlwasserleitung, eingebracht wird.
